# EUROPÄISCHE PATENTSCHRIFT

(11) **EP 2 638 977 B1**
(45) Veröffentlichungstag und Bekanntmachung des Hinweises auf die Patenterteilung: **04.09.2019**
(21) Anmeldenummer: 13157985.6
(22) Anmeldetag: 06.03.2013
(51) Int. Cl.: B01D 46/00, B01D 47/00

(54) **Vorrichtung zur Luftaufbereitung für einen Raum mit einer Lackieranlage für Wasserlacke**
Device for the treatment of air for a room with a painting system for water-based paints
Dispositif de traitement de l'air pour une pièce comportant une installation de peinture pour peinture à l'eau

(30) Priorität: 12.03.2012 AT 5002412 U
(43) Veröffentlichungstag der Anmeldung: 18.09.2013
(73) Patentinhaber: Hauptkorn, Herbert, 91586 Lichtenau (DE)
(72) Erfinder: Hauptkorn, Herbert, 91586 Lichtenau (DE)
(74) Vertreter: Patentanwaltskanzlei Hübscher

(56) Entgegenhaltungen:
- DE-A1- 4 234 527
- DE-A1- 4 319 739
- US-A- 4 687 686

## Beschreibung

Die Erfindung bezieht sich auf eine Vorrichtung zur Luftaufbereitung für einen Raum mit einer Lackieranlage für Wasserlacke, umfassend einen Luftwäscher, der innerhalb einer Einhausung eine mit Hochdruckdüsen zum Versprühen des Waschwassers ausgerüstete Waschkammer mit Anschlüssen für die Zu- und Ableitung der zu reinigenden Luft sowie eine Auffangwanne für das Waschwasser unterhalb der Waschkammer aufweist.

Bei Lackieranlagen für Wasserlacke ist es bekannt (AT 504677 B1), Luft aus dem Lackierbereich abzusaugen und nach einem Ausscheiden eines Teiles der abgesaugten Abluft und einem Ersatz der ausgeschiedenen Abluft durch Frischluft dem Lackierbereich wieder in einem Kreislauf zuzuführen. Das Absaugen von Luft aus dem Lackierbereich bietet die Möglichkeit, Lackreste, Staubteile und andere Feststoffe aus dem abgesaugten Luftstrom abzuscheiden. Die Raumluft wird dabei über Filter geführt, die für ein Abscheiden von Lackresten und Feststoffen aus der Umluft sorgen. Diese Filter sind zum Teil feuchtigkeitsempfindlich und müssen gewartet werden, weil ja die zurückgehaltenen Lackreste und Feststoffteilchen die Filterkörper mit der Zeit verlegen, sodass sich die Druckverluste erhöhen und als Folge davon bei gleichbleibender Lüfterleistung der Luftdurchsatz verringert.

Das Dokument DE4319739 beschreibt eine Gaswaschanlage, insbesondere zum Waschen von Rauchgasen, mit einer Strahlstufe mit einem oder mehreren zumindest etwa senkrechten Rohren zur Aufnahme von Düsen für das Waschmedium und einem Behälter zum Ausscheiden des Waschmediums und der Feststoffe sowie zum Ableiten des gereinigten Gases, wobei die Rohre in den Behälter münden. Dokument DE4234527 bezieht sich auf ein Verfahren zum Rückführen von Lackiermaterial, insbesondere lösungsmittelfreiem oder lösungsmittelarmen Wasserlack, aus dem beim Spritzlackieren bei einem Spritzstand entstehenden Overspray, das zum Teil an besprühten Spritzstandwänden niedergeschlagen wird, wobei die Spritzstandwände mit verdünntem Wasserlack aus einem Sammelbehälter als Spülflüssigkeit beflutet werden und zum Teil durch einen dem Spritzstand nachgeschaltetem Luftwäscher aus der zwangsweise durch den Spritzstand hindurchgeführten Luft abgeschieden wird.

Um eine verbesserte Luftreinigung zu erhalten, ist es bekannt, Luftwäscher vorzusehen, die eine von der zu reinigenden Luft durchströmte Waschkammer aufweisen, in der Waschwasser verdüst wird, wobei sich Wassertröpfchen mit der Feststofffracht der zu reinigenden Luft verbinden und sich mit den Feststoffen in einer unterhalb der Waschkammer vorgesehenen Auffangwanne sammeln, aus der das mit der Feststofffracht beladene Waschwasser abgezogen werden kann. Die bekannten Luftwäscher dieser Art eignen sich allerdings nur bedingt für die Luftaufbereitung eines Raumes mit einer Lackieranlage für Wasserlacke, sodass für höhere Anforderungen an die Luftqualität Filter unerlässlich bleiben.

Der Erfindung liegt somit die Aufgabe zugrunde, eine Vorrichtung zur Luftaufbereitung für einen Raum mit einer Lackieranlage für Wasserlacke so auszugestalten, dass eine weitgehend wartungsfreie Luftaufbereitung möglich wird, und zwar unter Berücksichtigung des Umstandes, dass der Lackieranlage eine von Feststoffanteilen und Lackresten freie Luft mit einem vergleichsweise hohen relativen Feuchtigkeitsgehalt zugeführt werden soll, um ein vorzeitiges Verdampfen des als Lösungsmittel im Wasserlack enthaltenen Wassers zu unterbinden.

Ausgehend von einer Vorrichtung der eingangs geschilderten Art löst die Erfindung die gestellte Aufgabe dadurch, dass die, den Boden der Einhausung bildende Auffangwanne Waschwasser mit einer vorgegebenen Mindestspiegelhöhe enthält und dass innerhalb der Einhausung mit den seitlichen Anschlüssen einerseits für Umluft und anderseits für Frischluft verbundene, oberhalb der Auffangwanne endende Rohrbögen mit einer nach unten gegen den Spiegel des Waschwassers gerichteten Ausströmrichtung vorgesehen sind.

Die Erfindung bezieht sich auf eine Vorrichtung definiert in Anspruch1.

Da in der Einhausung zufolge dieser Maßnahmen die zugeführte Frischluft zugleich mit der im Kreislauf geführten Umluft für den Raum mit der Lackieranlage behandelt wird, ergeben sich einfache Konstruktionsvoraussetzungen, weil die Frischluft gemeinsam mit der Umluft gereinigt und die relative Feuchtigkeit der gereinigten, sich aus Frischluft und Umluft zusammensetzenden Abluft aus dem Luftwäscher durch den Waschvorgang auch bei vergleichsweise trockener Frischluft ausreichend hoch gehalten werden kann. Damit eine den jeweiligen Anforderungen entsprechende Reinigung der Frischluft und der Umluft durch ein Abscheiden der Feststofffracht sichergestellt werden kann, genügt es allerdings nicht, nur für eine entsprechende Verweilzeit der Luft in der Waschkammer zu sorgen. Mit der Umlenkung am Wasserspiegel sowohl der gegen den Spiegel des Waschwassers in der Auffangwanne geblasenen Umluft als auch der in gleicher Weise geführten Frischluft wird ein erheblicher Anteil der Feststoffbeladung aus der Frischluft und der Umluft abgeschieden, bevor die Luft durch die Waschkammer aufsteigt und mit Hilfe der in der Waschkammer vorgesehenen Hochdruckdüsen mit einem feinen Wassernebel beaufschlagt wird. Erst nach der umlenkbedingten Teilabscheidung kann in überraschender Weise für ein vollständiges Abscheiden der Restfracht an Feststoffteilchen gesorgt werden, die während des Waschvorgangs mit den angelagerten Wassertröpfchen nach unten in die Auffangwanne sinken, sodass sich sonst erforderliche Zusatzfilter erübrigen.

Die durch den Waschvorgang bedingte, vergleichsweise hohe relative Luftfeuchtigkeit innerhalb der Waschkammer unterstützt nicht nur den Waschvorgang, sondern sorgt auch für vorteilhafte Lackierbedingungen im Bereich der der Lackieranlage aus dem Luftwäscher zugeführten Abluft. Bei einer entsprechenden Einstellung der Waschparameter können somit gleichbleibende Luftbedingungen unabhängig von Schwankungen im Bereich der relativen Luftfeuchtigkeit oder der Temperatur der zugeführten Frischluft gewährleistet werden, wenn gegebenenfalls für eine zusätzliche Temperaturregelung für die Abluft aus dem Luftwäscher gesorgt wird. Zu diesem Zweck kann für die über den Anschluss aus der Waschkammer abgeführte Abluft eine Heizeinrichtung vorgesehen werden.

Mit dem gegenüber den Strömungsquerschnitten der Rohrbögen für die Frischluft und die Umluft erheblich größeren Strömungsquerschnitt der Waschkammer tritt eine für den Auswaschvorgang der Feststoffteilchen vorteilhafte Beruhigung der umgelenkten Luftströmung ein, sodass für eine entsprechende Verweilzeit der zu reinigenden Luft in der Waschkammer vorgesorgt ist.

Besonders vorteilhafte Reinigungsbedingungen ergeben sich, wenn der Anschluss für die Abluft in der Decke der Einhausung oberhalb eines Tropfenabscheiders vorgesehen ist. Der Tropfenabscheider bedingt nämlich eine zusätzliche Beaufschlagung der durch die Waschkammer zum Abluftanschluss aufsteigenden Luftströmung mit Waschwasser durch die vom Tropfenabscheider abfallenden Wassertröpfchen.

Um vorteilhafte Waschbedingungen sicherzustellen, kann das Waschwasser in der Waschkammer in einer Überschussmenge für eine vollständige Dampfsättigung der Abluft versprüht werden, wonach die Abluft aus der Waschkammer zur Einstellung der jeweils gewünschten relativen Feuchtigkeit unterhalb der Dampfsättigung entsprechend erwärmt wird. Mit der Dampfübersättigung innerhalb der Waschkammer bilden die von der Luft nicht aufnehmbaren Nebeltröpfchen gewissermaßen einen Nebelvorhang, der für eine besonders gute Reinigung der Luft von Lackresten und Feststoffteilchen sorgt. Allerdings eignet sich Abluft mit einer relativen Feuchtigkeit von 100 % nicht zur Beaufschlagung einer Lackieranlage für Wasserlacke, weil in dieser gesättigten Luft das Lösungsmittel der Wasserlacke nicht verdampfen kann. Aus diesem Grunde wird die Abluft zur Einstellung der jeweils gewünschten relativen Feuchtigkeit, beispielsweise zwischen 75 und 85 %, entsprechend erwärmt.

Damit eine ausreichende Verweilzeit der zu reinigenden Luft in der Waschkammer sichergestellt werden kann, kann die zu reinigende Luft mit einer Strömungsgeschwindigkeit kleiner als 1 m/s von unten nach oben durch die Waschkammer geführt werden, wobei die vergleichsweise geringe Strömungsgeschwindigkeit die Abscheidung der ausgewaschenen Lackreste und Feststoffteilchen unterstützt.

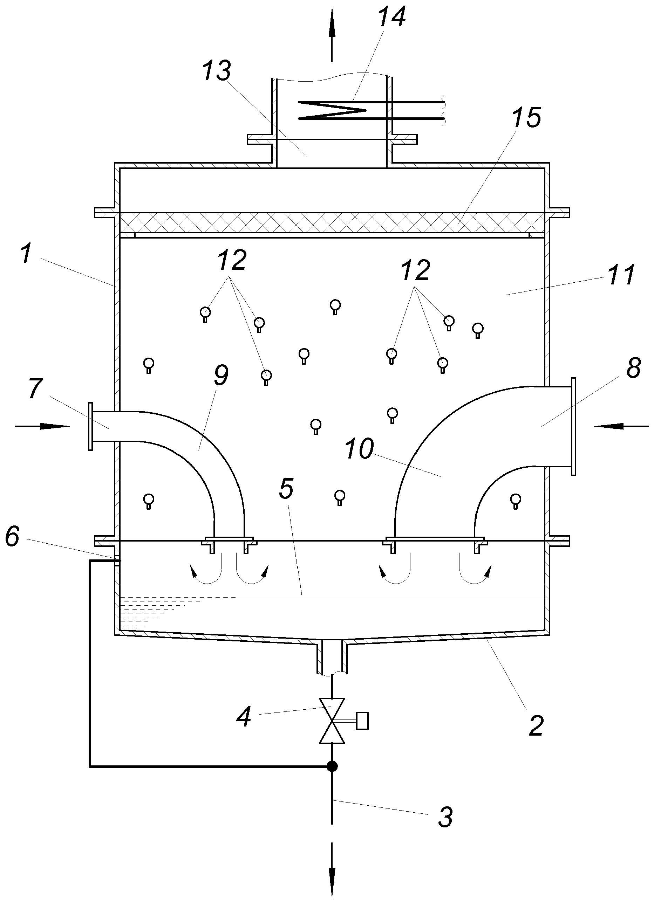

In der Zeichnung ist der Erfindungsgegenstand beispielsweise dargestellt, und zwar wird eine erfindungsgemäße Vorrichtung zur Luftaufbereitung für einen Raum mit einer Lackieranlage für Wasserlacke in einem schematischen Aufriss gezeigt.

Die dargestellte Vorrichtung weist eine Einhausung 1 auf, deren Boden durch eine Auffangwanne 2 für Waschwasser gebildet wird, das sich in der Auffangwanne 2 sammelt und zusammen mit den ausgewaschenen Feststoffteilchen über eine Austragleitung 3 aus der Auffangwanne 2 abgeführt werden kann. Der Austrag des Waschwassers aus der Auffangwanne 2 erfolgt über ein Steuerventil 4, das in an sich bekannter Weise so angesteuert wird, dass der Spiegel 5 des in der Auffangwanne 2 gesammelten Waschwassers eine vorgegebene Mindesthöhe nicht unterschreitet. Die maximale Spiegelhöhe wird durch einen Überlauf 6 vorgegeben, der mit der Austragleitung 3 verbunden ist.

Die Einhausung 1 ist mit seitlichen Anschlüssen 7 und 8 einerseits für Frischluft und anderseits für Umluft versehen, die aus dem Raum mit der Lackieranlage angesaugt wird. Diese Anschlüsse 7, 8 stehen mit innerhalb der Einhausung 1 vorgesehenen Rohrbögen 9 und 10 in Verbindung, die oberhalb des Spiegels 5 des Waschwassers in der Auffangwanne 2 enden und eine nach unten gegen den Spiegel 5 des Waschwassers weisende Ausströmrichtung bestimmen. Dieser Ausströmrichtung zufolge wird die durch den Rohrbogen 9 geblasene Frischluft sowie die durch den Rohrbogen 10 geblasene Umluft entsprechend der angedeuteten Strömungspfeile am Spiegel 5 des Waschwassers in der Auffangwanne 2 umgelenkt, um entsprechend beruhigt nach oben zu strömen und die oberhalb der Auffangwanne 2 innerhalb der Einhausung 1 gebildete Waschkammer 11 zu durchsetzen. Die Waschkammer 11 ist mit Hochdruckdüsen 12 zum Verdüsen von Waschwasser zu einem feinen Wassernebel bestückt. Der Wassernebel verbindet sich mit dem Restanteil der Feststofffracht bzw. der Lackreste in der die Waschkammer 11 nach oben durchsetzenden Luftströmung, sodass die Feststoffteilchen und Lackreste zusammen mit den angelagerten Wassertröpfchen entgegen der Luftströmung absinken und in der Auffangwanne 2 gesammelt werden. Die in dieser Weise gereinigte Luft verlässt die Einhausung 1 durch einen Anschluss 13 in der Decke der Einhausung 1 und kann im Bedarfsfall über eine Heizeinrichtung 14 erwärmt werden. Dem Anschluss 13 für die gereinigte Abluft ist ein Tropfenabscheider 15 in Strömungsrichtung der Luft vorgelagert, sodass mit der Luftströmung mitgeführte Wassertröpfchen abgeschieden werden und im Bereich des Tropfenabscheiders 15 anfallende Kondensattröpfchen vom Tropfenabscheider 15 nach unten abfallen, wobei die aufsteigende Luft mit diesen abgeschiedenen Wassertröpfchen zusätzlich beaufschlagt wird, was mit einer entsprechenden zusätzlichen Auswaschwirkung verbunden ist.

Um besonders vorteilhafte Reinigungsbedingungen einhalten zu können, wird in die Waschkammer 11 eine Waschwassermenge eingedüst, die die für eine vollständige Dampfsättigung der Abluft aus der Waschkammer benötigte Wassermenge übersteigt. Aufgrund dieser Überschussmenge im Hinblick auf eine vollständige Dampfsättigung der Abluft stellt sich innerhalb der Waschkammer 11 ein zur Auffangwanne 2 absinkender Nebelvorhang ein, der dafür sorgt, dass alle Lackreste und Feststoffteilchen mit diesem Nebel beaufschlagt und zusammen mit den Nebeltröpfchen aus der Luftströmung abgeschieden werden. Dies gelingt insbesondere bei einer vergleichsweise langsamen Strömungsgeschwindigkeit der aufsteigenden Luft kleiner als 1 m/s. Um weitestgehend alle Feststoffteile zu erfassen, sollte die Höhe der Waschkammer zumindest 1 m betragen. Wegen der hohen Reinigungswirkung kann auch der Umluftanteil vergleichsweise hoch gehalten werden, beispielsweise bei 90 %.

Die dampfgesättigte Abluft ist für die Beaufschlagung der Lackieranlage ungeeignet, weil sie das in Wasserlacken als Lösungsmittel eingesetzte Wasser nicht aufnehmen kann. Zum langsamen Verdampfen des Lösungsmittels ist eine vergleichsweise hohe relative Luftfeuchtigkeit erwünscht, die jedoch unterhalb der Dampfsättigung liegen muss. Aus diesem Grunde wird die gesättigte Abluft aus der Waschkammer über die Heizeinrichtung 14 erwärmt, sodass über diese Erwärmung die gewünschte relative Luftfeuchtigkeit, beispielsweise von 80 %, zur Beaufschlagung der Lackieranlage eingestellt werden kann.

## Patentansprüche

1. Vorrichtung zur Luftaufbereitung für einen Raum mit einer Lackieranlage für Wasserlacke, umfassend einen Luftwäscher, der innerhalb einer Einhausung (1) eine mit Hochdruckdüsen (12) zum Versprühen des Waschwassers ausgerüstete Waschkammer (11) mit Anschlüssen (7, 8) für die Luftzu- und - ableitung sowie eine Auffangwanne (2) für das Waschwasser unterhalb der Waschkammer (11) aufweist, wobei die, den Boden der Einhausung bildende, Auffangwanne (2) Waschwasser mit einer vorgegebenen Mindestspiegelhöhe enthalten kann und wobei innerhalb der Einhausung (1) mit den seitlichen Anschlüssen (7, 8) einerseits für Umluft und anderseits für Frischluft verbundene, oberhalb der Auffangwanne (2) endende Rohrbögen (9, 10) mit einer nach unten gegen den Spiegel (5) des Waschwassers gerichteten Ausströmrichtung vorgesehen sind.

2. Vorrichtung nach Anspruch 1, **dadurch gekennzeichnet, dass** der Anschluss (13) für die Abluft in der Decke der Einhausung (1) oberhalb eines Tropfenabscheiders (15) vorgesehen ist.

3. Vorrichtung nach Anspruch 1 oder 2, **dadurch gekennzeichnet, dass** für die über den Anschluss (13) aus der Waschkammer (11) abgeführte Abluft eine Heizeinrichtung (14) vorgesehen ist.

4. Verfahren zur Luftaufbereitung für einen Raum mit einer Lackieranlage für Wasserlacke mit Hilfe einer Vorrichtung nach den Ansprüchen 1 bis 3, **dadurch gekennzeichnet, dass** in die Waschkammer (11) Waschwasser in einer Überschussmenge für eine vollständige Dampfsättigung der Abluft versprüht wird und dass die Abluft aus der Waschkammer (11) zur Einstellung einer relativen Feuchtigkeit unterhalb der Dampfsättigung erwärmt wird.

5. Verfahren nach Anspruch 4, **dadurch gekennzeichnet, dass** die zu reinigende Luft mit einer Strömungsgeschwindigkeit kleiner als 1 m/s von unten nach oben durch die Waschkammer (11) geführt wird.

## Claims

1. Air conditioning device for a room having a painting facility for water-based paints, comprising an air washer which comprises, within a housing (1), a washing chamber (11) fitted with high-pressure nozzles (12) for spraying the washing water and having connections (7, 8) for the supply/discharge of air, and comprises a collecting trough (2) for the washing water beneath the washing chamber (11), wherein the collecting trough (2) forming the base of the housing can contain washing water at a predetermined minimum surface level, and wherein pipe bends (9, 10) which are connected to the lateral connections (7, 8) on the one hand for recirculation air and on the other hand for fresh air and which terminate above the collecting trough (2) are provided within the housing (1) and have an outflow direction which is directed downwards towards the surface (5) of the washing water.

2. Device as claimed in claim 1, **characterised in that** the connection (13) for the exhaust air is provided in the ceiling of the housing (1) above a droplet separator (15).

3. Device as claimed in claim 1 or 2, **characterised in that** a heating device (14) is provided for the exhaust air discharged from the washing chamber (11) via the connection (13).

4. Air conditioning method for a room having a painting facility for water-based paints using a device as claimed in any one of claims 1 to 3, **characterised in that** washing water is sprayed into the washing chamber (11) in an excess amount for complete vapour saturation of the exhaust air, and **in that** the exhaust air from the washing chamber (11) is heated to adjust a relative humidity below vapour saturation.

5. Method as claimed in claim 4, **characterised in that** the air to be cleaned is guided through the washing chamber (11) from bottom to top at a flow rate of less than 1 m/s.

## Revendications

1. Dispositif de traitement de l'air pour un local comprenant une installation de peinture pour peintures à l'eau, comportant un laveur d'air qui présente, à l'intérieur d'un encoffrage (1), un compartiment de lavage (11), équipé de buses haute pression (12) pour la pulvérisation de l'eau de lavage, avec des raccords (7, 8) pour l'amenage et l'évacuation de l'air, ainsi qu'un bac collecteur (2) pour l'eau de lavage en dessous du compartiment de lavage (11), le bac collecteur, (2) formant le fond de l'encoffrage, pouvant contenir de l'eau de lavage avec un niveau minimal prédéfini, et, à l'intérieur de l'encoffrage (1), des coudes de tube (9, 10), se terminant au-dessus du bac collecteur (2) et reliés aux raccords latéraux (7, 8) pour de l'air circulé, d'une part, et pour de l'air frais, d'autre part, avec une direction d'écoulement orientée vers le bas dans le sens contraire du niveau (5) de l'eau de lavage, étant prévus.

2. Dispositif selon la revendication 1, **caractérisé en ce que** le raccord (13) pour l'air évacué est prévu dans la couverture de l'encoffrage (1) au-dessus d'un séparateur de gouttes (15).

3. Dispositif selon la revendication 1 ou 2, **caractérisé en ce que** pour l'air évacué sortant du compartiment de lavage (11) par le biais du raccord (13), il est prévu un dispositif chauffant (14).

4. Procédé de traitement de l'air pour un local comprenant une installation de peinture pour peintures à l'eau, à l'aide d'un dispositif selon les revendications 1 à 3, **caractérisé en ce que** dans le compartiment de lavage (11), de l'eau de lavage est pulvérisée en une quantité excédentaire pour une saturation en vapeur totale de l'air évacué et **en ce que** l'air évacué du compartiment de lavage (11) est chauffé pour réglage d'une humidité relative en deçà de la saturation de vapeur.

5. Procédé selon la revendication 4, **caractérisé en ce que** l'air à nettoyer est amené à une visse d'écoulement inférieur à 1 m/s, du bas vers le haut, à travers le compartiment de lavage (11).
